Europäisches Patentamt

(19) European Patent Office

Office européen des brevets

(11) Numéro de publication: **0 058 128**
A2

(12) # DEMANDE DE BREVET EUROPEEN

(21) Numéro de dépôt: 82630010.5

(22) Date de dépôt: 18.01.82

(51) Int. Cl.³: **C 10 L 5/40**

(30) Priorité: 05.02.81 LU 83114

(43) Date de publication de la demande:
18.08.82 Bulletin 82/33

(84) Etats contractants désignés:
AT BE CH DE FR GB IT LI NL

(71) Demandeur: ARBED S.A.
Avenue de la Liberté 19
L-2930 Luxembourg(LU)

(72) Inventeur: Artois, Fernand
25 rue J.P. Federspiel
L-1512 Luxembourg(LU)

(74) Mandataire: Neyen, René
ARBED Administration Centrale P.F. 1802
L-2930 Luxembourg(LU)

(54) Procédé de fabrication de combustibles à partir de produits recueillis à la sortie d'installations de compostage.

(57) Un procédé de fabrication de combustibles à partir de produits recueillies à la sortie d'installations de compostage prévoit que l'on trie les produits à la sortie du réacteur de compostage pour recueillir une fraction présentant un pouvoir calorifique supérieur à 4000 kcal/kg. Suivant l'invention on mélange à ces matières un liant qui est soit du compost, soit des boues provenant de l'épuration des eaux et on compacte le mélange obtenu.

Le compost qui est utilisé comme liant peut être du compost fabriqué soit à partir de détritus ménagers, soit à partir de boues d'épuration des eaux, soit encore à partir d'un mélange des deux.

EP 0 058 128 A2

Croydon Printing Company Ltd

Procédé de fabrication de combustibles à partir de produits recueillis à la sortie d'installations de compostage.

La présente invention concerne un procédé de fabrication de combustibles à partir de produits recueillis à la sortie d'installations de compostage, notamment de détritus ménagers seuls ou mélangés à des boues d'épuration des eaux.

Le compostage de matières organiques par voie aérobie est un processus connu depuis longtemps et qui a fait l'objet de nombreuses réalisations en vue d'une industrialisation automatisée et de l'obtention d'un produit de composition uniforme.

On a par ailleurs reconnu qu'il est utile d'inclure dans les détritus ménagers à composter par voie aérobie des produits tels que les boues provenant de stations d'épuration biologique des eaux afin d'obtenir un compost présentant un rapport %C/%N favorable en vue de l'utilisation comme engrais bio-minéral. Le problème de l'addition de ces boues qui ont tendance à s'agglomérer et à ne pas se mélanger uniformément aux détritus, ce qui peut conduire à des entraves à la marche des réactions d'oxydation au cours du compostage et à la formation d'un produit inhomogène incomplètement composté, a été résolu par un procédé que le déposant a décrit dans son brevet BE 879.840. Ce procédé prévoit l'utilisation d'un réacteur rotatif dans lequel on achemine des détritus broyés et concassés. On dépose sur les détritus, en défilement 5 à 30 % en poids de boues d'épuration des eaux sous forme de lacets d'une longueur de 5-15 cm et d'un diamètre de 1-5 mm obtenus par extrusion et on mélange détritus et boues avant leur entrée dans un réacteur rotatif où on les met en contact avec de l'air que l'on aspire à travers le réacteur en une quantité déterminée.

Tandis que les problèmes du compostage proprement dit se laissent résoudre à l'aide d'un équipement approprié, le traitement du compost frais déjà produit est onéreux. Le pourcentage élevé en matières non-compostables augmente le risque de voir la technique du compostage aérobie abandonnée en faveur d'autres méthodes de traitement, telles l'incinération ou pyrolyse qui détruisent bien entendu les matières organiques précieuses qui sont contenues dans les immondices, sans qu'il y ait possibilité de la valoriser.

Ainsi le compost frais est mélangé à des objets commes boîtes à conserves, cailloux, morceaux de verre, d'os, de textileset de matières plastiques qui ne sont pas compostables. On se trouve par conséquent devant la nécessité d'effectuer un certain nombre de triages en vue de libérer le compost frais de corps étrangers non-compostables. Tandis qu'il est aisé de recueillir les corps ferromagnétiques à l'aide d'aimants, il reste à s'occuper des autres ingrédients qui ne possèdent pas de propriété physique qui les rendrait accessibles de manière spécifique. Pour ces raisons les installations de compostage comprennent normalement à leur sortie plusieurs stations de criblage et de tamisage.

Pour être en mesure de procéder à un triage valable et exempt de frais élevés, le déposant a imaginé des procédés et des installations adéquats qu'il a décrits dans ses brevets LU 80.539 et LU 81.571. Ces techniques de triage exploitent les différences qui existent entre les diverses catégories de matières à la sortie de l'installation de compostage et qui sont basées essentiellement sur la séparation gravimétrique.

On a pu se rendre compte que ce triage fournit outre le compost lui-même, 3 fractions non-compostables qui se distinguent par leur densité et par le fait que les fractions moyenne et légère sont des matières combustibles. En effet ces matières à base de cellulose et de composés organiques synthétiques et textiles, présentent un pouvoir calorifique supérieur à 4000 kcal/kg.

Il est bien entendu que l'on a mis au point des méthodes afin d'obtenir ces combustibles sous une forme appropriée en vue de leur utilisation comme tels. Ainsi il est connu de traiter ces matières par une extrusion resp. par une compression vigoureuse pour former des corps compacts, comme p.ex. des briquettes.

Or ces traitements nécessitent la mise en oeuvre d'installations coûteuses qui consomment de l'énergie et dont les outils s'usent rapidement.

Le but de la présente invention était donc de proposer un procédé pour la fabrication de combustibles à partir de matières recueillies à la sortie d'installations de compostage, permettant d'aboutir, sans engager des frais élevés ni en appareillage, ni en énergie, à des combustibles présentant une compacité suffisante en vue de leur utilisation dans des installations de combustion.

Ce but est atteint par le procédé suivant l'invention qui prévoit de trier les matières à la sortie d'une installation où se déroule un processus de compostage et de recueillir les matières présentant un pouvoir calorifique supérieur à 4000 kcal/kg et qui est caractérisé en ce que l'on mélange à ces matières un liant qui est constitué de matières qui interviennent directement dans le processus de compostage et que l'on compacte le mélange obtenu.

Suivant l'invention le liant est du compost fabriqué, soit à partir de détritus ménagers, soit à partir de boues d'épuration des eaux, soit encore à partir d'un mélange des deux.

L'avantage principal de la méthode suivant l'invention découle du fait que l'utilisateur obtient la possiblilté de diversifier sa production sans pour autant changer quoi que ce soit du point de vue de l'approvisionnement en matières premières. En effet les procédés connus de triage qu'il doit effectuer sur le produit à la sortie de l'installation de compostage, notamment le procédé de triage que le déposant a décrit dans ses brevets LU 80.539 et LU 81.571, fournissent de manière extrêmement aisée et fiable, les fractions accusant des propriétés de combustible.

Une autre forme d'exécution du procédé suivant l'invention prévoit que l'on utilise comme liant du moins en partie des boues de l'épuration des eaux.

Le compostage suivant l'invention n'exige que des pressions modestes, grâce au liant particulier qu'est le compost resp. les boues d'épuration des eaux. Dans ce contexte il y a lieu de souligner que le compost frais et les boues sont des matières qui contiennent du carbone, si bien qu'elles ne diminuent pas le pouvoir calorifique des combustibles préparés suivant l'invention.

Les faibles pressions requises ainsi que la simplification du dispositif de compactage nécessaire, constituent des avantages réels vis-à-vis des installations et des procédés conventionnels basés sur le ramollissement du moins partiel de certaines matières plastiques, supposées toujours présentes dans les détritus ménagers, lorsque les mélanges sont exposés à des pressions et à des températures élevées.

Revendications

1. Procédé de fabrication de combustibles à partir de produits recueillis à la sortie d'installations de compostage, lequel procédé prévoit que l'on trie les produits à la sortie du réacteur de compostage pour recueillir une fraction présentant un pouvoir calorifique supérieur à 4000 kcal/kg, caractérisé en ce que l'on mélange à ces matières un liant qui est constitué de matières qui interviennent directement dans le processus de compostage et que l'on comporte le mélange obtenu.

2. Procédé suivant la revendication 1, caractérisé en ce que le liant est du compost fabriqué à partir de détritus ménagers.

3. Procédé suivant la revendication 1, caractérisé en ce que le liant est du compost fabriqué à partir de boues de l'épuration des eaux.

4. Procédé suivant les revendications 1-3, caractérisés en ce que le liant est du compost fabriqué à partir des détritus mélangés à des boues d'épuration des eaux.

5. Procédé suivant la revendication 1, caractérisé en ce que le liant est composé du moins en partie par des boues provenant de l'épuration des eaux.